# EUROPÄISCHE PATENTSCHRIFT

(11) **EP 0 641 181 B1**
(45) Veröffentlichungstag und Bekanntmachung des Hinweises auf die Patenterteilung: **09.12.1998**
(21) Anmeldenummer: 94910395.6
(22) Anmeldetag: 08.03.1994
(51) Int. Cl.: A61C 17/22

(54) **BÜRSTENTEIL FÜR EINE ELEKTRISCHE ZAHNBÜRSTE**
BRUSH MEMBER FOR AN ELECTRIC TOOTHBRUSH
ELEMENT FORMANT BROSSE POUR BROSSE A DENTS ELECTRIQUE----------

(30) Priorität: 17.03.1993 DE 4308444
(43) Veröffentlichungstag der Anmeldung: 08.03.1995
(73) Patentinhaber: Braun Aktiengesellschaft, Frankfurt am Main (DE)
(72) Erfinder: DRIESEN, Georges, D-65760 Eschborn (DE); HILFINGER, Peter, D-61350 Bad Homburg (DE)
(86) Internationale Anmeldenummer: EP9400705
(87) Internationale Veröffentlichungsnummer: WO9421192

(56) Entgegenhaltungen:
- EP-A- 0 173 150
- WO-A-91/07116
- DE-A- 4 201 873
- FR-A- 2 587 183
- US-A- 1 947 324

## Beschreibung

Ein Bürstenteil für eine elektrische Zahnbürste gemäß dem Oberbegriff von Anspruch 1 ist aus der FR-A-2 587 183 bekannt.

Auch aus der internationalen Patentanmeldung WO 91/07116 der Anmelderin ist eine derartige elektrische Zahnbürste, bei der der gesamte Borstenträger flächig mit Borstenbüscheln gleicher Länge bestückt ist, bekannt.

In Verbindung mit dem oszillierenden Antrieb hat sich die Bürste im praktischen Gebrauch gut bewährt und führt selbst bei relativ kurzer Anwendungsdauer zu sehr guten Reinigungsergebnissen. Die Reinigung der Interdentalräume erfordert vom Anwender einen relativ hohen Konzentrationsaufwand in der Hinsicht, daß die Bürste hierzu durch eine leichte Kippbewegung bezüglich der Längsmittelachse exakt auf die Interdentalräume auszurichten ist.

Aus der FR 2 587 183 sind ferner Zahnbürsten mit Borsten in zwei unterschiedlichen Höhen bekannt. Der Bürstenkopf kann dabei länglich oder kreisförmig ausgebildet sein und die Borstenbüschel unterschiedlicher Höhe sind alternierend zueinander, und zwar ringförmig, in Sektoren, parallel oder winklig zueinander angeordnet.

Aufgabe der Erfindung ist es, ein Bürstenteil für eine elektrische Zahnbürste mit einem kreiszylindrischen Borstenträger dahingehend weiterzubilden, daß eine verbesserte Reinigung der Interdentalräume gegeben ist.

Die Aufgabe wird erfindungsgemäß im wesentlichen dadurch gelöst, daß in einer Mittel- bzw. Grundstellung des Borstenträgers der Durchmesser etwa rechtwinklig zur Längsmittelachse des Bürstenteils angeordnet ist und die Borstenbüschel auf dem Durchmesser eine größere Steifigkeit aufweisen als die Borstenbüschel in einem Innenfeld zwischen dem Durchmesser und dem äußeren Kreisring, wobei die größere Steifigkeit durch einen größeren Borstendurchmesser oder durch eine größere Anzahl von Borsten pro Borstenbüschel erzeugbar ist.

Diese Anordnung der Borstenbüschel ermöglicht ein einfaches Eindringen der Borsten in die Interdentalräume und die Ausbildung der Borstenbüschel auf dem Durchmessser ermöglicht eine gründliche Reinigung dieses Bereiches, während die restlichen Borsten wie bisher die Zahnflächen reinigen. Die durch die alternierende Drehbewegung des Borstenträgers bei den Borsten erzeugte schraubenlinienförmige Bewegung, bei der das Zentrum (Drehachse) der auf dem Durchmesser festgelegten Borsten nicht bewegt wird, unterstützt dabei das Eindringen der Borsten in den Interdentalraum und gestattet darüberhinaus für den Benutzer eine einfache Zentrierung der Bürste im Interdentalraum. Die Borsten passen sich durch die oszillierende Putzbewegung den unterschiedlich geformten Interdentalräumen an, wodurch insgesamt ein sehr gutes Reinigungsergebnis erreichbar ist.

Besonders zweckmäßig ist es, wenn die Borsten derjenigen Borstenbüschel, die nicht auf dem Durchmesser oder dem äußeren Kreisring des Borstenträgers festgelegt sind, sich wenigstens in einer der Größen Länge, Durchmesser oder Anzahl in Richtung kleinerer Werte, von den Borsten der Borstenbüschel auf dem Durchmesser oder dem äußeren Kreisring unterscheiden. Auf diese Weise wird erreicht, daß sich die Borsten des Innenfeldes anders verhalten als die Borsten auf dem Durchmesser oder dem äußeren Kreisring.

Sind beispielsweise die Borsten des Innenfeldes kürzer als die Borsten auf dem Durchmesser und dem äußeren Kreisring, so liegen die Borsten des Innenfeldes auf den Zahnflächen auf und reinigen diese, während die längeren Borsten des Durchmessers der Interdentalreinigung dienen und die ebenfalls längeren Borsten des äußeren Kreisringes Plaque im Zahnsaumbereich entfernen.

Eine weitere Ausgestaltung der Erfindung besteht darin, daß die Borsten des Innenfeldes bei gleicher oder unterschiedlicher Länge einen kleineren Borstendurchmesser aufweisen als die Borsten des Durchmessers oder des äußeren Kreisringes. Die Steifigkeit der längeren Borsten des Durchmessers und des äußeren Kreisringes ist aufgrund des größeren Borstendurchmessers größer, so daß diese steiferen Borsten wiederum besonders vorteilhaft zur Reinigung der Interdentalräume und der Zahnsäume verwendet werden können.

Nach einer weiteren Ausführungsform hat es sich als sehr vorteilhaft erwiesen, im Innenfeld nur wenige Borstenbüschel vorzusehen. Dabei können die Borsten der Borstenbüschel des Innenfeldes auch kürzer und/oder dünner als die übrigen Borsten sein. Die im Vergleich zur Anzahl der Borsten auf dem Durchmesser und dem äußeren Kreisring geringe Anzahl von Borsten im Innenfeld bewirkt, daß die wenigen Borsten des Innenfeldes zwar die Zahnflächen reinigen, sich aber nicht so stark auf den Zahnoberflächen abstützen können, daß die Borsten der Borstenbüschel auf dem Durchmesser und dem äußeren Kreisring in den Interdentalraum eindringen und diesen reinigen können.

Bei all diesen erfindungsgemäßen Variationsmöglichkeiten können zusätzlich auch noch die Borsten der auf dem Durchmesser festgelegten Borstenbüschel und die Borsten der auf dem äußeren Kreisring festgelegten Borstenbüschel unterschiedliche Längen und/oder unterschiedliche Borstendurchmesser aufweisen.

Die Borsten auf dem äußeren Kreisring und auf dem Durchmesser dringen einerseits besonders stark in die Interdentalräume ein bzw. reinigen die Zahnsäume. Andererseits dienen die Borsten auf dem Durchmesser und dem äußeren Kreisring ebenfalls dazu, die Zahnflächen zu reinigen, wenn sie über diese hinwegbewegt werden. Es erfolgt somit eine vollständige Zahnflächenreinigung mit einer verbesserten Interdental- und Zahnsaumreinigung.

Bei dieser Ausgestaltung bestehen zusätzlich die Möglichkeiten, die Borsten auf dem Durchmesser und die Borsten auf dem äußeren Kreisring hinsichtlich ihrer Länge und/oder hinsichtlich ihres Borstendurchmessers zu variieren. Insbesondere kann es zweckmäßig sein, die Borsten auf dem Durchmesser mit einer größeren Länge zu versehen als die Borsten auf dem äußeren Kreisring. Auf diese Weise können weitere vorteilhafte Reinigungswirkungen erreicht werden, wie sie bereits in anderem Zusammenhang erläutert worden sind.

Eine weitere vorteilhafte Weiterbildung der Erfindung besteht darin, daß die auf dem äußeren Kreisring des Borstenträgers festgelegten Borstenbüschel eine größere Länge aufweisen als die auf dem Durchmesser festgelegten Borstenbüschel. Auf diese Weise kann die Reinigung der Zahnsäume besonders hervorgehoben werden. Es ist jedoch auch möglich, die genannte Weiterbildung mit allen anderen bisher beschriebenen Ausgestaltungen und Weiterbildungen zu kombinieren. Dadurch, daß die auf dem Durchmesser festgelegten Borstenbüschel in einer Mittelstellung bzw. Grundstellung des Borstenträgers in etwa einen rechten Winkel zur Längsmittelachse des Bürstenteiles aufweisen, werden die hintereinander angeordneten längeren Borsten bei normaler Ausrichtung der elektrischen Zahnbürste in Bezug auf die Zähne einfach und sicher auf den zu reinigenden Interdentalraum ausgerichtet, wodurch für den Benutzer die Handhabung deutlich vereinfacht wird.

Von Vorteil sind die Borstenbüschel mit den kürzeren Borsten auf zwei in etwa konzentrischen Kreisringen auf dem Borstenträger angeordnet. Dadurch wird eine günstige Verteilung der Borstenbüschel auf dem Borstenträger erreicht und die für die Beborstung zur Verfügung stehende Fläche des Borstenträgers effektiv genutzt.

Dadurch, daß die längeren Borsten die kürzeren Borsten um etwa 1,5 mm überragen, ist ein einfaches Eindringen und damit effektives Reinigen des Interdentalraumes durch die längeren Borsten möglich, während die kürzeren Borsten problemlos die Zahnoberflächen von Plaque befreien.

In einer vorteilhaften Ausbildung weisen die kürzeren Borsten einen Durchmesser von 5 - 6 mil (1 mil = 0,0254 mm), die längeren Borsten einen Durchmesser von mehr als 6 - 7 mil auf.

Von Vorteil bestehen darüberhinaus die Borstenbüschel mit längeren Borsten aus Farb-Indikator-Borsten, so daß mit den verbesserten Putzeigenschaften einer solchen Bürste, dem Benutzer durch einen Farbumschlag angezeigt werden kann, daß ein Bürstenaustausch erforderlich bzw. zweckmäßig ist.

In einer vorteilhaften Ausgestaltung der Erfindung beträgt der Drehwinkel des Bostenträgers bevorzugt in etwa +/- 35° bezogen auf die Mittelstellung bzw. Grundstellung des Borstenträgers. Damit wird ein Bereich angegeben, in welchem die Reinigung der Interdentalräume besonders effektiv erfolgt.

Als besonders vorteilhaft haben sich folgende Konfigurationen für das Bürstenteil erwiesen. Der äußere Kreisring ist mit ca. 12 +/- 2 Borstenbüscheln bestückt, wobei die Borsten eine Länge von ca. 8 bis 9 (+/- 1) mm und einen Durchmesser von 6 +/- 1 mil aufweisen. Auf dem Durchmesser sind ca. 6 +/- 1 Borstenbüschel vorgesehen mit Borsten einer Länge von ca. 8 bis 9 (+/- 1) mm und einem Durchmesser von ca. 6 +/- 1 mil. Das Innenfeld ist mit ca. 2 bis 6 +/- 2 Borstenbüscheln bestückt, deren Borsten eine Länge zwischen ca. 7 bis 9 (+/- 1) mm und einen Durchmesser von ca. 5 bis 6 (+/- 1) mil aufweisen.

Weitere Ziele, Merkmale, Vorteile und Anwendungsmöglichkeiten der vorliegenden Erfindung ergeben sich aus der nachfolgenden Beschreibung der Ausführungsbeispiele.
- Fig. 1: eine schematische Darstellung einer elektrischen Zahnbürste in Seitenansicht,
- Fig. 2: ein erstes Ausführungsbeispiel eines Borstenträgers mit Borsten,
- Fig. 3: eine Draufsicht auf ein Bürstenteil (Teildarstellung) mit Borstenträger und Borsten gemäß Fig. 2,
- Fig. 4: ein zweites Ausführungsbeispiel eines Borstenträgers mit Borsten und Bürstenteil in der Draufsicht,
- Fig. 5: den Borstenträger mit Borsten im Längsschnitt A-A gemäß Fig. 4.

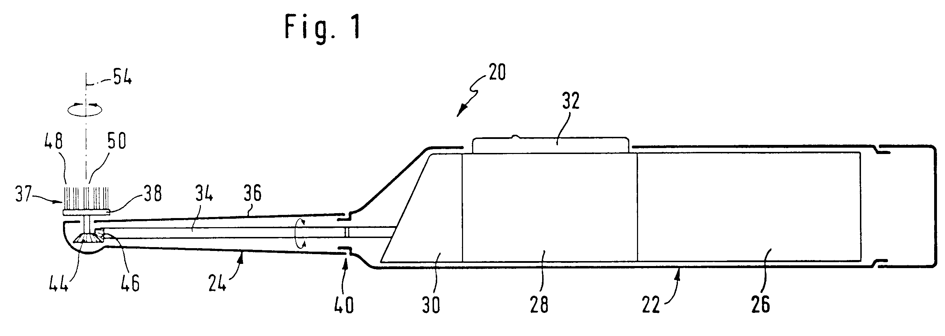

In Figur 1 ist mit der Bezugsziffer 20 eine elektrische Zahnbürste bezeichnet. Die Zahnbürste 20 besteht aus einem Griffteil 22 und einem daran ankuppelbaren Bürstenteil 24. Das Griffteil 22 nimmt einen Akkumulator 26 oder auch eine Batterie, einen Elektromotor 28, sowie eine Umsteuerungseinrichtung 30 zur Umsetzung der kontinuierlichen Rotationsbewegung des Elektromotors in eine oszillierende Bewegung auf. Am Griffteil 22 ist außen ein Schalter 32 zur Aktivierung der Zahnbürste 20 angebracht. Das Bürstenteil 24 weist ein hohles Trägerrohr 36 auf, welches eine Welle 34 aufnimmt. Das Trägerrohr 36 und die Welle 34 sind über eine nicht näher dargestellte Kupplung 40 mit dem Griffteil 22 verbindbar. An dem dem Griffteil 22 abgewandten Ende des Bürstenteils 24 ist ein Borstenträger 38 angeordnet zur Aufnahme der Borsten 48, 50 bzw. Borstenbüschel 60, 62, 64, 66. über eine Kegelradverzahnung 44 am Ende des Borstenträgers 38 wird über ein Kegelradsegment 46 am Kopfende der Welle 34 die Bürste 37 in eine oszillierende Bewegung versetzt. Der dabei vom Borstenträger 38 überstrichenen Drehwinkelbereich nimmt bevorzugt einen Wert im Bereich von etwa +/- 35° +/- 5° an, wobei jedoch auch Werte im Bereich von +/- 20° bis +/- 100° möglich sind. Die Drehachse 54 des Borstenträgers 38 bildet mit der Drehachse der Welle 34 einen Winkel von ca. 90°. Diese Zahnbürste der Fig. 1 ist im Detail in der internationalen Patentanmeldung WO 91/07116 der Anmelderin beschrieben.

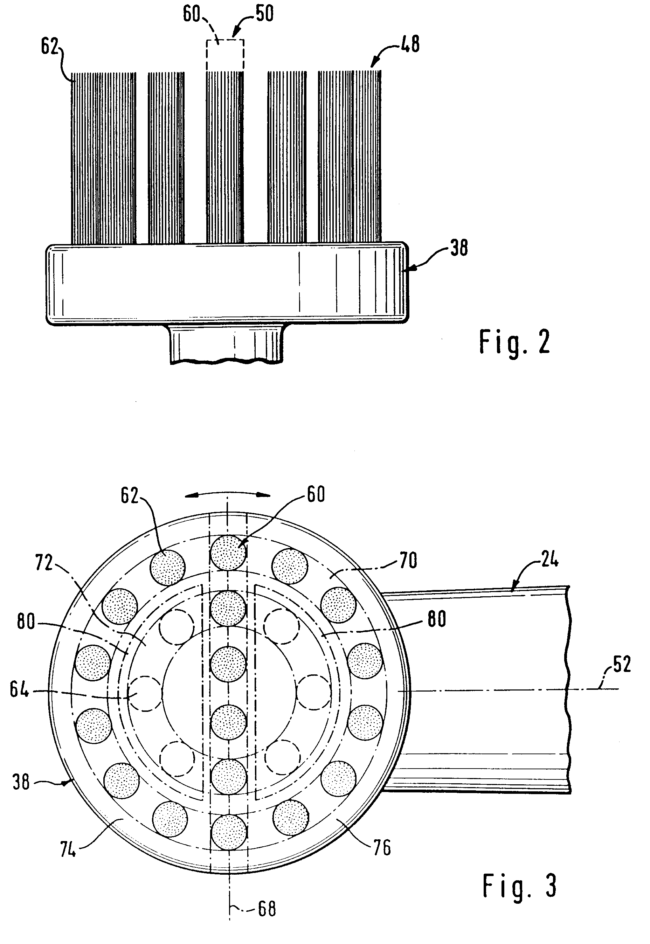

In Figur 2 ist ein Borstenträger 38 gemäß einem ersten Ausführungsbeispiel mit Borstenbüscheln 62 kürzerer Borsten 48 bestückt, die von einer in etwa mittig auf dem Borstenträger 38 angeordneten Reihe von Borstenbüscheln 60 mit längeren Borsten 50 unterbrochen werden. Zur Verdeutlichung dieser Anordnung ist der zwischen den kürzeren Borsten 48 und den längeren Borsten 50 vorhandene Zwischenraum leicht vergrößert dargestellt.

Die Anordnung der kürzeren Borsten 48 und längeren Borsten 50 auf dem Borstenträger 38 ist in Figur 3 dargestellt. Die Borstenbüschel 60 mit längeren Borsten 50 sind auf einem Durchmesser 68 des Borstenträgers 38 festgelegt. In der dargestellten Mittelstellung des Borstenträgers 38 weisen die auf dem Durchmesser 68 festgelegten Borstenbüschel 60 dabei zu einer Längsmittelachse 52 des Bürstenteiles 24 einen in etwa rechten Winkel auf. In dieser Grundstellung/Mittelstellung des Borstenträgers 38 lassen sich die Borstenbüschel 60 mit längeren Borsten 50 vorteilhaft auf den Interdentalraum ausrichten, ohne daß dabei die elektrische Zahnbürste 20 aus der normalen Putzstellung herausbewegt werden muß. Durch die oszillierende Bewegung des Borstenträgers 38 von +/- 20° bis +/- 100°, bevorzugt +/- 35°, bezogen auf die Grundstellung, dringen die längeren Borsten 50 zur Reinigung in die Interdentalräume ein. Die Borstenbüschel 62, 64 mit den kürzeren Borsten 48 sind rechts und links des Durchmessers 68 auf zwei Kreissegmenten 74, 76 und/oder auf zwei in etwa konzentrischen Kreisringen 70, 72 angeordnet. Durch die Oszillationsbewegung des Borstenträgers 38 während des Putzvorganges werden die Zähne, sowie der angrenzende Bereich des Zahnsaumes, durch die kürzeren Borsten 48 gereinigt, während durch die längeren Borsten 50 gleichzeitig eine gründliche Reinigung der Interdentalräume erfolgt, ohne daß sich die kürzeren Borsten 48 und die längeren Borsten 50 in irgendeiner Weise behindern. Für den Benutzer erfolgt die Handhabung der elektrischen Zahnbürste in herkömmlicher Weise.

In einem zweiten Ausführungsbeispiel ist der Borstenträger 38 sowohl auf dem Durchmesser 68 als auch auf dem äußeren Kreisring 70 mit aus längeren Borsten 50 bestehenden Borstenbüscheln 60, 66 bestückt, wobei sich diese Bereiche teilweise im Bereich 78 überschneiden. In der Mittelstellung des Borstenträgers 38 weisen die auf dem Durchmesser 68 festgelegten Borstenbüschel 60 einen in etwa rechten Winkel zur Längsmittelachse 52 des Bürstenteiles 24 auf. Wird der Borstenträger 38 oszillierend angetrieben, dringen die längeren, auf dem Durchmesser 68 festgelegten Borsten 50 in die Interdentalräume ein, während die längeren Borsten 50 des äußeren Kreisringes 70 insbesondere den Bereich des Zahnsaumes reinigen. Die kürzeren Borsten 48 der Borstenbüschel 64 stützen sich auf den Zahnoberflächen ab und reinigen diese. Diese Kombination von längeren Borsten 50 auf dem Durchmesser 68, sowie dem äußeren Kreisring 70 des Borstenträgers 38 mit dazwischen angeordneten kürzeren Borsten 48, bewirkt somit eine gründliche Reinigung der Interdentalräume, Zahnaußen-/-innenflächen sowie des Zahnsaumes.

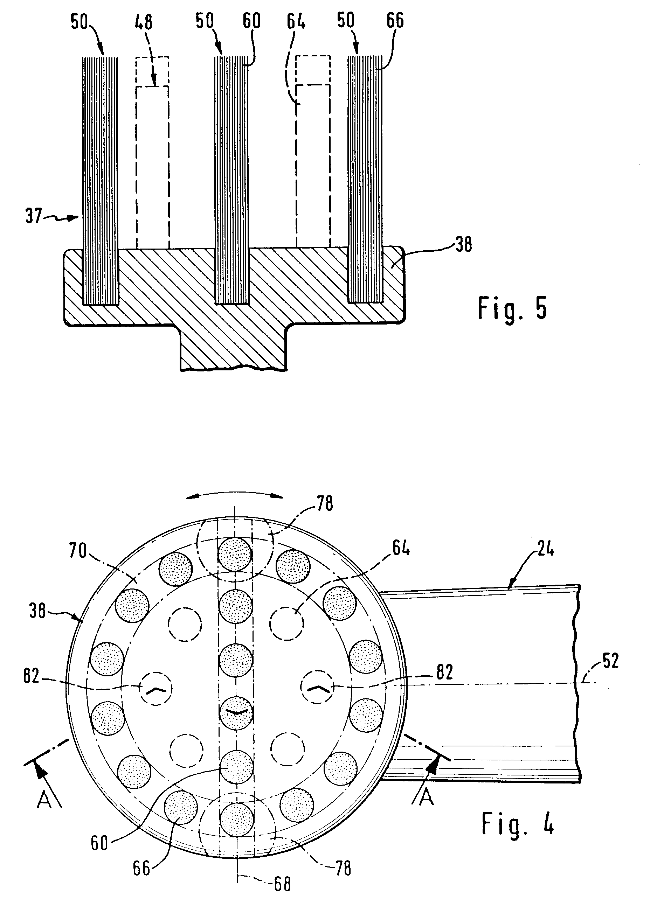

Anhand Figur 5 ist die Anordnung der Borstenbüschel 60, 64, 66 unterschiedlicher Borstenlängen 48, 50 im Borstenträger 38 verdeutlicht. Die längeren Borsten 50 weisen mit vorzugsweise 6 - 7 mil gegenüber den kürzeren Borsten 48 mit 5 bis 6 mil einen größeren Durchmesser auf. Die durch den größeren Durchmesser erfolgte Erhöhung der Steifigkeit der Borsten 50 wird bedingt durch die größere Länge der Borsten 50 in etwa ausgeglichen, so daß kürzere und längere Borsten 48, 50 annähernd die gleiche Steifigkeit aufweisen und die Bürste 37 eine Borstensteifigkeit aufweist, die als weich eingestuft werden kann. Von besonderem Vorteil bestehen die Borstenbüschel 60, 66 mit längeren Borsten 50 aus Farb-Indikator-Borsten, die bei Gebrauch ihre Farbe verändern und durch den Farbumschlag dem Benutzer signalisieren, daß die Bürste 37 zu wechseln ist.

In einem weiteren Ausführungsbeispiel weisen die Borsten der auf dem äußeren Kreisring 70 des Borstenträgers 38 festgelegten Borstenbüschel 62 eine größere Länge auf als die Borsten der auf dem Durchmesser 68 festgelegten Borstenbüschel 60. Ansonsten ist die Anordnung der einzelnen Borstenbüschel 60, 62, 64 gleichartig wie in der Fig. 3.

Bei den beschriebenen drei Ausführungsbeispielen ist jeweils ein von den auf dem inneren Kreisring 72 festgelegten Borstenbüschel 64 gebildetes Innenfeld 80, bestehend aus zwei in etwa halbkreisförmigen Segmenten vorgesehen. Die Länge der Borsten der Borstenbüschel 64 des Innenfeldes kann gleich oder kleiner sein als die Länge der Borsten der Borstenbüschel 62, 60 auf dem äußeren Kreisring 70 bzw. auf dem Durchmesser 68. Bei weiteren Abwandlungen kann zusätzlich oder alternativ hierzu der Durchmesser der Borsten der Borstenbüschel 64 des Innenfeldes 80 gleich oder kleiner sein als der Durchmesser der Borsten der Borstenbüschel 60, 62 auf dem äußeren Kreisring 70 oder auf dem Durchmesser 68.

Des weiteren ist es möglich, daß wiederum zusätzlich oder alternativ zu den vorherigen Abwandlungen die Anzahl der Borsten, also insbesondere der einzelnen Borstenfilamente, bzw. der Borstenbüschel 64 des Innenraumes wesentlich kleiner ist als die Anzahl der Borsten bzw. Borstenbüschel 60, 62 auf dem äußeren Kreisring 70 oder dem Durchmesser 68. Insbesondere besteht ein Ausführungsbeispiel darin, daß auf dem inneren Kreisring 72 auf jeder Seite des Durchmessers 68 nur ein Borstenbüschel 64 vorhanden ist.

In Weiterbildung der Erfindung sind in dem Innenfeld 80 zwei Borstenbüschel 82, jeweils eines in einem Segment, vorgesehen.

## Patentansprüche

1. Bürstenteil (24), für eine elektrische Zahnbürste (20) mit einem Griffteil (22), welches einen elektromotorischen Antrieb (28) umfaßt, wobei das Bürstenteil (24) mit dem Griffteil (22) verbindbar ist, mit einem an dem dem Griffteil (22) abgewandten Ende drehbar angeordneten, insbesondere im wesentlichen kreiszylindrischen, Borstenträger (38), an dem stirnseitig Borsten (48, 50) in Form von Borstenbüscheln (60, 62, 64, 66) angeordnet sind, der Borstenträger (38) eine in etwa rechtwinklig zu einer Längsmittelachse (52) des Bürstenteiles (24) ausgerichtete Drehachse (54) aufweist und alternierend drehbar, bevorzugt in einem Winkelbereich von + /-20° bis + /-100°, antreibbar ist und die Borstenbüschel (60, 62, 66) hintereinander auf einem Durchmesser (68) und auf einem äußeren Kreisring (70) des Borstenträgers (38) festgelegt sind, **dadurch gekennzeichnet,** daß in einer Mittel- bzw. Grundstellung des Borstenträgers (38) der Durchmesser (68) etwa rechtwinklig zur Längsmittelachse (52) des Bürstenteils (24) angeordnet ist und die Borstenbüschel (60) auf dem Durchmesser (68) eine größere Steifigkeit aufweisen als die Borstenbüschel (64) in einem Innenfeld (80) zwischen dem Durchmesser (68) und dem äußeren Kreisring (70), wobei die größere Steifigkeit durch einen größeren Borstendurchmesser oder durch eine größere Anzahl von Borsten pro Borstenbüschel (60, 62, 66) erzeugbar ist.

2. Bürstenteil nach Anspruch 1, **dadurch gekennzeichnet,** daß Borstenbüschel (64) des Innenfeldes (80) auf einem inneren Kreisring (72) des Borstenträgers (38) angeordnet sind.

3. Bürstenteil nach Anspruch 1 oder 2, **dadurch gekennzeichnet,** daß die Borstenbüschel (64) des Innenfeldes (80) Borsten mit einem geringeren Durchmesser als der Durchmesser der Borsten der Borstenbüschel (60, 62, 66) auf dem äußeren Kreisring und/oder auf dem Durchmesser aufweisen.

4. Bürstenteil nach einem der vorhergehenden Ansprüche, **dadurch gekennzeichnet,** daß die Borstenbüschel (64) des Innenfeldes (80) Borsten mit einer geringeren Länge als die Länge der Borsten der Borstenbüschel (60, 62, 66) auf dem äußeren Kreisring und/oder auf dem Durchmesser aufweisen.

5. Bürstenteil nach einem der vorhergehenden Ansprüche, **dadurch gekennzeichnet,** daß die Anzahl der Borsten der Borstenbüschel (64) des Innenfeldes (80) geringer ist als die Anzahl der Borsten der Borstenbüschel (60, 62, 66) auf dem äußeren Kreisring und/oder auf dem Durchmesser.

6. Bürstenteil nach einem der vorhergehenden Ansprüche, **dadurch gekennzeichnet,** daß die Borsten der Borstenbüschel (62, 66) auf dem äußeren Kreisring (70) sich von den Borsten der Borstenbüschel (60) auf dem Durchmesser (68) in der Länge, der Dicke, dem Durchmesser oder der Anzahl pro Borstenbüschel (60, 62, 66) unterscheiden.

7. Bürstenteil nach einem der vorhergehenden Ansprüche, **dadurch gekennzeichnet,** daß in dem Innenfeld (80) des Borstenträgers ein einziger Borstenbüschel (82) etwa mittig angeordnet ist.

8. Bürstenteil nach einem der Ansprüche 1 bis 5 oder 7, **dadurch gekennzeichnet,** daß die Borsten der Borstenbüschel (60, 62, 66) auf dem äußeren Kreisring und/oder auf dem Durchmesser die gleiche Länge aufweisen.

9. Bürstenteil nach einem der Ansprüche 1 bis 7, **dadurch gekennzeichnet,** daß die Borsten (50) der Borstenbüschel (60) auf dem Durchmesser (68) eine größere Länge als die Borsten (48) der anderen Borstenbüschel (62, 64) aufweisen.

10. Bürstenteil nach Anspruch 9, **dadurch gekennzeichnet,** daß die Borstenbüschel (62, 64) mit den kürzeren Borsten (48) auf zwei in etwa konzentrischen Kreisringen (70, 72) im Borstenträger (38) angeordnet sind.

11. Bürstenteil nach einem der vorhergehenden Ansprüche, **dadurch gekennzeichnet,** daß die längeren Borsten (50) die kürzeren Borsten (48) um etwa 1,5 mm überragen.

12. Bürstenteil nach einem der vorhergehenden Ansprüche, **dadurch gekennzeichnet,** daß die kürzeren Borsten (48) einen Durchmesser von 5 bis 6 mil, die längeren Borsten (50) einen Durchmesser von 6 bis 7 mil aufweisen.

13. Bürstenteil nach einem der vorhergehenden Ansprüche, **dadurch gekennzeichnet,** daß die Borstenbüschel (60, 66) mit längeren Borsten (50) aus Farb-Indikator-Borsten bestehen.

14. Bürstenteil nach einem der vorhergehenden Ansprüche, **dadurch gekennzeichnet,** daß der Drehwinkel des Borstenträgers (38) bevorzugt in etwa + /- 20° bis + /-100°, insbesondere etwa +/- 35°, bezogen auf die Mittelstellung bzw. Grundstellung des Borstenträgers (38) beträgt.

15. Bürstenteil nach einem der vorhergehenden Ansprüche, **dadurch gekennzeichnet,** daß der äußere Kreisring (70) mit ca. 12 Borstenbüscheln (62, 66) bestückt ist, wobei die Borsten eine Länge von ca. 8 bis 9 mm und einen Durchmesser von ca. 6 mil aufweisen.

16. Bürstenteil nach einem der vorhergehenden Ansprüche, **dadurch gekennzeichnet,** daß auf dem Durchmesser (68) ca. 6 Borstenbüschel angeordnet sind, wobei die Borsten eine Länge von ca. 8 bis 9 mm und einen Durchmesser von ca. 6 mil aufweisen.

17. Bürstenteil nach einem der vorhergehenden Ansprüche, **dadurch gekennzeichnet,** daß das Innenfeld (80) mit ca. 2 bis ca. 6 Borstenbüscheln bestückt ist, wobei die Borsten eine Länge von ca. 7 bis 9 mm und einen Durchmesser von ca. 5 bis 6 mil aufweisen.

18. Bürstenteil nach einem der vorhergehenden Ansprüche, **dadurch gekennzeichnet**, daß die Borsten der Borstenbüschel (62, 66) auf dem äußeren Kreisring (70) sich von den Borstenbüscheln (60) auf dem Durchmesser (68) in der Länge unterscheiden, insbesondere daß die Borsten der Borstenbüschel (62, 66) auf dem äußeren Kreisring (70) länger sind als die Borsten der Borstenbüschel (60) auf dem Durchmesser (68).

## Claims

1. A brush section (24) for an electric toothbrush (20) with a handle section (22) comprising an electric motor drive mechanism (28), wherein the brush section (24) is adapted to be connected with the handle section (22) and has at its end remote from the handle section (22) an in particular essentially circular cylindrical rotary bristle supporting structure (38) on the end surface of which bristles (48, 50) are arranged in the form of tufts (60, 62, 64, 66), and wherein the bristle supporting structure (38) has its axis of rotation (54) at approximately right angles to a longitudinal center line (52) of the brush section (24) and is adapted to be driven in an alternating rotary motion, preferably over an arc of ± 20° to ± 100°, and the tufts (60, 62, 66) of bristles are serially located in position on a diameter (68) and on an outer circular ring (70) of the bristle supporting structure (38), **characterized in that** in a central or normal position of the bristle supporting structure (38) the diameter (68) is arranged at approximately right angles to the longitudinal center line (52) of the brush section (24), and that the bristle tufts (60) on the diameter (68) are of greater rigidity than the bristle tufts (64) in an inner field (80) between the diameter (68) and the outer circular ring (79), the increase in rigidity being obtainable by providing the bristles with a greater diameter or using a greater number of bristles per tuft (60, 62, 66).

2. The brush section as claimed in claim 1, **characterized in that** bristle tufts (64) of the inner field (80) are arranged on an inner circular ring (72) of the bristle supporting structure (38).

3. The brush section as claimed in claim 1 or 2, **characterized in that** the tufts (64) in the inner field (80) comprise bristles of a diameter smaller than the diameter of the bristles of the tufts (60, 62, 66) on the outer circular ring and/or on the diameter.

4. The brush section as claimed in any one of the preceding claims, **characterized in that** the tufts (64) in the inner field (80) comprise bristles of a length shorter than the length of the bristles of the tufts (60, 62, 66) on the outer circular ring and/or on the diameter.

5. The brush section as claimed in any one of the preceding claims, **characterized in that** the number of bristles of the tufts (64) in the inner field (80) is smaller than the number of bristles of the tufts (60, 62, 66) on the outer circular ring and/or on the diameter.

6. The brush section as claimed in any one of the preceding claims, **characterized in that** the bristles of the tufts (62, 66) arranged on the outer circular ring (70) differ in length, thickness, diameter or number per tuft (60, 62, 66) from the bristles of the tufts (60) arranged on the diameter (68).

7. The brush section as claimed in any one of the preceding claims, **characterized in that** a single tuft (82) of bristles is arranged approximately centrally in the inner field (80) of the bristle supporting structure.

8. The brush section as claimed in any one of the claims 1 to 5 or 7, **characterized in that** the bristles of the tufts (60, 62, 66) on the outer circular ring and/or on the diameter are of equal length.

9. The brush section as claimed in any one of the claims 1 to 7, **characterized in that** the bristles (50) of the tufts (60) arranged on the diameter (68) are of a length greater than the bristles (48) of the other tufts (62, 64).

10. The brush section as claimed in claim 9, **characterized in that** the tufts (62, 64) having the shorter bristles (48) are arranged on the bristle supporting structure (38) on two approximately concentric circular rings (70, 72).

11. The brush section as claimed in any one of the preceding claims, **characterized in that** the longer bristles (50) protrude beyond the shorter bristles (48) by 1.5 mm, approximately.

12. The brush section as claimed in any one of the preceding claims, **characterized in that** the shorter bristles (48) have a diameter of 5 to 6 mils, and the longer bristles (50) have a diameter of 6 to 7 mils.

13. The brush section as claimed in any one of the preceding claims, **characterized in that** the tufts (60, 66) comprising the longer bristles (50) are color-coded.

14. The brush section as claimed in any one of the preceding claims, **characterized in tha**t the angle of rotation of the bristle supporting structure (38) is preferably about ± 20° to ± 100°, in particular about ± 35°, related to the central or normal position of the bristle supporting structure (38).

15. The brush section as claimed in any one of the preceding claims, **characterized in that** the outer circular ring (70) is equipped with 12 bristle tufts (62, 66), approximately, the bristles having a length of between 8 and 9 mm, approximately, and a diameter of 6 mils, approximately.

16. The brush section as claimed in any one of the preceding claims, **characterized in that** six bristle tufts (60), approximately, are arranged on the diameter (68), the bristles having a length of between 8 and 9 mm, approximately, and a diameter of 6 mils, approximately.

17. The brush section as claimed in any one of the preceding claims, **characterized in that** the inner field (80) is equipped with two to six bristle tufts, approximately, the bristles having a length of between 7 and 9 mm, approximately, and a diameter of between 5 and 6 mils, approximately.

18. The brush section as claimed in any one of the preceding claims, **characterized in that** the bristles of the tufts (62, 66) arranged on the outer circular ring (70) differ in length from the bristles of the tufts (60) arranged on the diameter (68), in particular that the bristles of the tufts (62, 66) on the outer circular ring (70) are longer than the bristles of the tufts (60) on the diameter (68).

## Revendications

1. Elément de brossage (24) pour une brosse à dents électrique (20), comportant un élément de préhension (22) qui comprend un entraînement (28) à moteur électrique, dans lequel l'élément de brossage (24) peut être raccordé à l'élément de préhension (22), comportant un support de poils (38) en particulier sensiblement cylindrique, qui est agencé de façon à pouvoir tourner à l'extrémité tournée à l'écart de l'élément de préhension (22) et sur lequel sont agencés, du côté frontal, des poils (48, 50) sous la forme de touffes de poils (60, 62, 64, 66), dans lequel le support de poils (38) présente un axe de rotation (54) aligné approximativement à angle droit par rapport à un axe médian longitudinal (52) de l'élément de brossage (24) et peut être entraîné de façon à tourner de manière alternée, de préférence dans une plage angulaire de +/- 20° à +/- 100°, et dans lequel les touffes de poils (60, 62, 66) sont fixées l'une derrière l'autre sur un diamètre (68) et sur un anneau circulaire externe (70) du support de poils (38), ***caractérisé en ce que***, dans une position médiane ou de base du support de poils (38), le diamètre (68) est agencé approximativement à angle droit par rapport à l'axe médian longitudinal (52) de l'élément de brossage (24) et en ce que les touffes de poils (60) sur le diamètre (68) présentent une rigidité supérieure à celle des touffes de poils (64) dans une région interne (80) entre le diamètre (68) et l'anneau circulaire externe (70), la rigidité supérieure pouvant être produite par un diamètre de poils plus grand ou par un nombre plus grand de poils par touffe de poils (60, 62, 66).

2. Elément de brossage suivant la revendication 1, caractérisé en ce que les touffes de poils (64) de la région interne (80) sont agencées sur un anneau circulaire interne (72) du support de poils (38).

3. Elément de brossage suivant la revendication 1 ou 2, caractérisé en ce que les touffes de poils (64) de la région interne (80) présentent des poils avec un diamètre plus petit que le diamètre des poils des touffes de poils (60, 62, 66) sur l'anneau circulaire externe et/ou sur le diamètre.

4. Elément de brossage suivant l'une des revendications précédentes, caractérisé en ce que les touffes de poils (64) de la région interne (80) présentent des poils avec une longueur plus petite que la longueur des poils des touffes de poils (60, 62, 66) sur l'anneau circulaire externe et/ou sur le diamètre.

5. Elément de brossage suivant l'une des revendications précédentes, caractérisé en ce que le nombre de poils des touffes de poils (64) de la région interne (80) est inférieur au nombre de poils des touffes de poils (60, 62, 66) sur l'anneau circulaire externe et/ou sur le diamètre.

6. Elément de brossage suivant l'une des revendications précédentes, caractérisé en ce que les poils des les touffes de poils (62, 66) sur l'anneau circulaire externe (70) se distinguent de poils des touffes de poils (60) sur le diamètre (68) par la longueur, l'épaisseur, le diamètre ou le nombre par touffe de poils (60, 62, 66).

7. Elément de brossage suivant l'une des revendications précédentes, caractérisé en ce qu'une touffe de poils unique (82) est agencée approximativement au milieu dans la région interne (80) du support de poils.

8. Elément de brossage suivant l'une des revendications 1 à 5 ou la revendication 7, caractérisé en ce que les poils des touffes de poils (60, 62, 66) sur l'anneau circulaire externe et/ou sur le diamètre présentent la même longueur.

9. Elément de brossage suivant l'une des revendications 1 à 7, caractérisé en ce que les poils (50) des touffes de poils (60) sur le diamètre (68) présentent une longueur plus grande que celle des poils (48) des autres touffes de poils (62, 64).

10. Elément de brossage suivant la revendication 9, caractérisé en ce que les touffes de poils (62, 64) avec les poils plus courts (48) sont agencées, dans le support de poils (38), sur deux anneaux circulaires (70, 72) approximativement concentriques.

11. Elément de brossage suivant l'une des revendications précédentes, caractérisé en ce que les poils plus longs (50) dépassent les poils plus courts (48) d'approximativement 1,5 mm.

12. Elément de brossage suivant l'une des revendications précédentes, caractérisé en ce que les poils plus courts (48) présentent un diamètre de 0,127 à 0,1524 mm (5 à 6 mil) et les poils plus longs (50) un diamètre de 0,1524 à 0,1778 mm (6 à 7 mil).

13. Elément de brossage suivant l'une des revendications précédentes, caractérisé en ce que les touffes de poils (60, 66) comportant des poils plus longs (50) sont constituées de poils à indication par couleur.

14. Elément de brossage suivant l'une des revendications précédentes, caractérisé en ce que l'angle de rotation du support de poils (38) est de préférence d'approximativement +/- 20° à +/- 100°, en particulier +/- 35° par rapport à la position médiane ou positon de base du support de poils (38).

15. Elément de brossage suivant l'une des revendications précédentes, caractérisé en ce que l'anneau circulaire externe (70) est équipé d'approximativement douze touffes de poils (62, 66), les poils présentant une longueur d'approximativement 8 à 9 mm et un diamètre d'approximativement de 0,1524 mm (6 mil).

16. Elément de brossage suivant l'une des revendications précédentes, caractérisé en ce qu'approximativement six touffes de poils (60) sont agencées sur le diamètre (68), les poils présentant une longueur d'approximativement 8 à 9 mm et un diamètre d'approximativement de 0,1524 mm (6 mil).

17. Elément de brossage suivant l'une des revendications précédentes, caractérisé en ce que la région interne (80) est équipée d'approximativement deux à approximativement six touffes de poils, les poils présentant une longueur d'approximativement 7 à 9 mm et un diamètre d'approximativement de 0,127 à 0,1524 mm (5 à 6 mil).

18. Elément de brossage suivant l'une des revendications précédentes, caractérisé en ce que les poils des touffes de poils (62, 66) sur l'anneau circulaire externe (70) se distinguent de ceux des touffes de poils (60) sur le diamètre (68) par la longueur, et en particulier en ce que les poils des touffes de poils (62, 66) sur l'anneau circulaire externe (70) sont plus longs que les poils des touffes de poils (60) sur le diamètre (68).
